# EUROPEAN PATENT APPLICATION

(11) **EP 2 693 653 A1**
(43) Date of publication of application: **05.02.2014**
(21) Application number: 12360056.1
(22) Date of filing: 03.08.2012
(51) Int. Cl.: H04B 7/02, H04L 5/00

(54) **Coordinated multipoint transmission modes**

(71) Applicant: Alcatel Lucent, 75007 Paris (FR)
(72) Inventor: Zhang, Min, Swindon, Wiltshire SN5 7DJ (GB); Baker, Matthew P J, Canterbury, Kent CT2 9DB (GB); LIM, Seau Sian, Swindon, Wiltshire SN1 4GU (GB); Palat, Sudeep, Swindon, Wiltshire SN5 6EE (GB)
(74) Representative: Script IP Limited

(57) **Abstract**

A method of configuring user equipment in a wireless communication network to operate to receive a transmission on one or more component carriers or a dynamically changing coordinated multipoint transmission from one or more transmission points in the network, a computer program product and network control node operable to perform that method. The method comprises: determining, for the user equipment, a set of two or more transmission points from which the user equipment may receive a transmission and allocating them to a coordinated multipoint transmission measurement set associated with the user equipment; determining, for the user equipment, a set of component carriers and associated transmission points in the multipoint transmission measurement set from which the user equipment may receive a transmission; allocating a set of modes of operation and component carriers associated with transmission points in the coordinated multipoint transmission measurement set for communication with the user equipment; associating a codepoint to each mode in the allocated set of modes of operation of the set of transmission points to form a codebook; and informing the user equipment of the codebook. Aspects and embodiments allow coordinated multipoint transmission schemes to be supported simultaneously with carrier aggregation techniques within a network and there is no need to define new bits for inclusion into the downlink control information message format.

## Description

### FIELD OF THE INVENTION

A method of configuring user equipment in a wireless communication network to operate to receive a transmission on one or more component carriers and a dynamically changing coordinated multipoint transmission from one or more transmission points in the network, a computer program product and a network control node operable to perform the method; a method of interpreting downlink control signalling indicative of a component carrier and selected mode of operation of transmission points in a coordinated multipoint transmission measurement set associated with user equipment in a wireless communication network, a computer program product and user equipment operable to perform that method.

### BACKGROUND

Coordinated multi-point (CoMP) transmission and reception is a tool which may be implemented within a wireless communication network operating according to LTE radio access technology and may offer improvements within a network to data rates, cell-edge throughput, and also overall system throughput. Coordinated multi-point transmission may allow such improvements by functioning to coordinate scheduling, in terms of time and frequency, and beam forming (spatial diversity) across transmission points. Each transmission point may comprise a radio cell or remote radio head. Coordinated multi-point transmission schemes may require dynamic turning on and off of transmission points.

It is desired that a network be able to take advantage of coordinated multipoint transmission techniques.

### SUMMARY

A first aspect provides a method of configuring user equipment in a wireless communication network to operate to receive a transmission on one or more component carriers and a dynamically changing coordinated multipoint transmission from one or more transmission points in the network, the method comprising: determining, for the user equipment, a set of two or more transmission points from which the user equipment may receive a transmission and allocating them to a coordinated multipoint transmission measurement set associated with the user equipment; determining, for the user equipment, a set of component carriers and associated transmission points in the multipoint transmission measurement set from which the user equipment may receive a transmission; allocating a set of modes of operation and component carriers associated with transmission points in the coordinated multipoint transmission measurement set for communication with the user equipment; associating a codepoint to each mode in the allocated set of modes of operation of the set of transmission points to form a codebook; and informing the user equipment of the codebook.

It has been recognised that it is possible to increase data throughput in a wireless communications network by using coordinated multipoint (CoMP) transmission techniques.

Coordinated multi-point (CoMP) transmission and reception is a tool which may be implemented within a wireless communication network operating according to LTE radio access technology and may offer improvements within a network to data rates, cell-edge throughput, and also overall system throughput. Coordinated multi-point transmission may allow such improvements by functioning to coordinate scheduling, in terms of time and frequency, and beam forming (spatial diversity) across transmission points. Each transmission point may comprise a radio cell or remote radio head. Coordinated multi-point transmission schemes may require dynamic turning on and off of transmission points, for example:
A Joint Transmission (JT) coordinated multi-point transmission scheme operates to allow simultaneous data transmission from multiple transmission points to a single user equipment or multiple user equipment in a time-frequency resource. The multiple transmission points may comprise part of, a majority of, a minority of, or an entire set of transmission points in a coordinated multi-point transmission cooperating set.
Dynamic point selection (DPS)/muting: user equipment receives a data transmission from one point (within a CoMP cooperating set) in a time-frequency resource. The transmitting/muting point may dynamically change from one subframe to another including varying over resource block pairs within a subframe. Such a coordinated multipoint transmission scheme requires that synchronised data is available simultaneously from multiple transmission points.

In both of these coordinated multipoint transmission schemes, in order to know how to decode data being sent, user equipment needs to "know" which transmission point(s) are supplying data at every subframe in order to know the positions of the PDSCH (data) by eliminating cell reference signal (CRS) information associated with a physical cell identity (PCI). The information to allow user equipment to interpret which resource elements are being used for data and which are part of a cell reference signal may be included in a message carried on a physical control channel. That message may be sent to user equipment in every downlink subframe on an appropriate physical control channel, for example, a PDCCH or ePDCCH.

LTE radio access technology may also allow for implementation of techniques which allow user equipment to receive data simultaneously on one or more carriers being transmistted by an eNB. Such techniques may be referred to as "Carrier Aggregation" and, in order to inform user equipment of the implementation of such techniques, a field known as a "Carrier Indicator Field" (CIF) exists in a Downlink Control Information message carried on an appropriate physical control channel, for example, a PDCCH or ePDCCH. The carrier indicator field allows signalling to be sent to user equipment so that the user equipment is operable to expect cross carrier scheduling. The carrier indicator field message comprises 3 bits (or 8 code points) included at the beginning of every downlink control information message format. It is assumed that up to 5 component carriers may be supported in a network operable to perform carrier aggregation techniques and therefore a 3 bit message allows for enough code points in a code book to indicate to user equipment which carriers are in use. It will be appreciated that the carrier indicator field value indicates to user equipment which carrier is in use to carry data.

If coordinated multipoint transmission techniques are employed within a network, it may be possible to indicate to user equipment which transmission point is transmitting data by reallocating the three bit carrier indicator field to act as a transmission point indicator. However it will be appreciated that such a straight reallocation is likely to mean that coordinated multipoint transmission techniques and carrier aggregation techniques could not be supported by appropriate control channel messaging simultaneously and thus those techniques may not be in operation for user equipment at the same time.

It will also be appreciated that it is possible to introduce new bits to control channel messaging to be carried on an appropriate physical control channel. That is to say, new bits may be added to an existing downlink control information message format. Such an approach may allow all available component carriers to support coordinated multipoint transmissions with, and without, cross carrier scheduling. However, introduction of new bits acts to reduce overall capacity of a physical control channel, for example, PDCCH capacity.

Coordinated multipoint transmission according to the first aspect may occur on one component carrier in some embodiments. In some embodiments, coordinated multipoint transmission may occur on more than one component carrier. Coordinated multipoint transmission may occur on one component carrier within component carriers sharing the same codebook. In some embodiments the codebook may not be used for identifying component carriers, that is to say, the component carriers are self-scheduled, the codebook may be used solely for coordinated multipoint transmission and the code points may relate solely to transmission point combinations used in coordinated multipoint transmission techniques.

Aspects and embodiments described herein recognize that the carrier indicator field contains 3 bits and thus 8 code points. Since carrier aggregation is only defined for up to 5 component carriers, there are 3 unused code points in the carrier indicator field which may be re-used for other purpose. Aspects recognize that it is possible to jointly encode a carrier indicator and a transmission point (or cell) indicator within the existing 3-bit carrier indicator field, without adding any extra bits to downlink control indicator messaging. Aspects reuse the 3 "spare" code points for indicating transmission point(s) responsible for transmission of data in each subframe, thus allowing user equipment to decode transmitted data successfully.

In one embodiment, each codepoint comprises a 3 bit code. Accordingly, up to eight different carrier and coordinated multipoint transmission schemes may be configured for use by each user equipment in a network. It will be appreciated that a network control node may be operable to select which schemes are likely to be of most use to a given user. The choice may be based on geographical location within a network, transmission point functionality or any other appropriate factors.

In one embodiment, a codepoint is indicative of a carrier associated with a mode of operation of the transmission points in the coordinated multipoint transmission measurement set for communication with the user equipment. Accordingly, a codepoint may be used to simply indicate use of a particular component carrier in a sub frame, in the manner of a typical carrier aggregation message.

In one embodiment, a codepoint is indicative of a cell reference signal associated with a coordinated multipoint mode of operation of the transmission points in the coordinated multipoint transmission measurement set for communication with the user equipment. In order to recognise data being transmitted, user equipment must be aware of the cell reference signal and channel state reference signal(s) being transmitted by an eNodeB, so that those signals can be "subtracted" from a received signal, leaving only the relevant data portion intended for given user equipment.

It will be appreciated that for one code point in the case that multipoints are transmitted, the cell reference signal may represent more than one cell reference signal since each transmission point may use different resource elements for cell reference signals.

In one embodiment, a codepoint comprises an indication of a channel state information reference signal associated with a mode of operation of the transmission points in the coordinated multipoint transmission measurement set for communication with the user equipment. Accordingly, signals typically used only for carrier estimation techniques may be "subtracted" from a received transmission, leaving a signat representative of data to be decoded by user equipment.

It will be appreciated that for one code point in the case that multipoints are transmitted, the channel state information may represent more than one channel state information signal since each transmission point may use different resource elements for channel state information signals.

In one embodiment, a codepoint comprises an indication of a cell reference signal and/or channel state information signal associated with a single transmission point involved in the mode of operation of the transmission points in the coordinated multipoint transmission measurement set for communication with the user equipment. Accordingly, the user equipment may be made aware of parameters which are associated with a single transmission point in order to be able to decode data transmissions.

In one embodiment, a codepoint comprises an indication of a combined cell reference signal or combined channel state information signal associated with a two or more transmission points involved in the mode of operation of the transmission points in the coordinated multipoint transmission measurement set for communication with the user equipment. Accordingly, the user equipment may be made aware of parameters which are associated with two or more transmission points in order to be able to decode data transmissions.

In one embodiment, the allocated set of modes comprises a sub-set of all available modes of operation of the transmission points in the coordinated multipoint transmission measurement set for communication with the user equipment. It will be appreciated that many more network transmission point and component carrier configurations may be available than there are codepoints in an available codebook. For example, a three bit codebook allows for 8 codepoints. Accordingly, a network control node may be operable to select an appropriate subset of codepoints from all possible codepoints to preconfigure each user equipment.

A second aspect provides a computer program product operable, when executed on a computer, to perform the method of the first aspect.

A third aspect provides a network control node operable to configure user equipment in a wireless communication network to operate to receive a transmission on one or more component carriers and a dynamically changing coordinated multipoint transmission from one or more transmission points in the network, the method comprising: determining, for the user equipment, a set of two or more transmission points from which the user equipment may receive a transmission and allocating them to a coordinated multipoint transmission measurement set associated with the user equipment; determining, for the user equipment, a set of component carriers and associated transmission points in the multipoint transmission measurement set from which the user equipment may receive a transmission; allocating a set of modes of operation and component carriers associated with transmission points in the coordinated multipoint transmission measurement set for communication with the user equipment; associating a codepoint to each mode in the allocated set of modes of operation of the set of transmission points to form a codebook; and informing the user equipment of the codebook.

In one embodiment, each codepoint comprises a 3 bit code.

In one embodiment, a codepoint is indicative of a carrier associated with a mode of operation of the transmission points in the coordinated multipoint transmission measurement set for communication with the user equipment.

In one embodiment, a codepoint is indicative of a cell reference signal associated with a coordinated multipoint mode of operation of the transmission points in the coordinated multipoint transmission measurement set for communication with the user equipment.

In one embodiment, a codepoint comprises an indication of a channel state information reference signal associated with a mode of operation of the transmission points in the coordinated multipoint transmission measurement set for communication with the user equipment.

In one embodiment, a codepoint comprises an indication of a cell reference signal and/or channel state information signal associated with a single transmission point involved in the mode of operation of the transmission points in the coordinated multipoint transmission measurement set for communication with the user equipment.

In one embodiment, a codepoint comprises an indication of a combined cell reference signal and/or combined channel state information signal associated with a two or more transmission points involved in the mode of operation of the transmission points in the coordinated multipoint transmission measurement set for communication with the user equipment.

In one embodiment, the allocated set of modes comprises a sub-set of all available modes of operation of the transmission points in the coordinated multipoint transmission measurement set for communication with the user equipment.

A fourth aspect provides a method of interpreting downlink control signalling indicative of a component carrier and selected mode of operation of transmission points in a coordinated multipoint transmission measurement set associated with user equipment in a wireless communication network; the method comprising:
receiving a codebook comprising a set of codepoints, each codepoint being associated with a component carrier and coordinated multipoint transmission mode of operation of transmission points in the multipoint transmission measurement set for communication with the user equipment; interpreting a codepoint received in downlink signalling with reference to the codebook; and configuring the user equipment to interpret data transmissions received in accordance with a component carrier and mode of operation of transmission points in the multipoint transmission measurement set associated with the codepoint.

Accordingly, user equipment may be operable to use the codebook implemented by the first aspect to decode data transmissions being made according to coordinated multipoint and carrier aggregation techniques in an LTE network. The existence of a codebook means that user equipment need not know exactly where the physical data is being transmitted from, and simply had the information that is required to decode a transmission whichever transmission point of component carrier has been selected.

In one embodiment, the downlink control signalling comprises a three bit codepoint.

In one embodiment, the downlink control signalling comprises reuse of a carrier indicator field message. Accordingly, no additional bits may be required in existing downlink control indicator messaging and bits which already exist may be used in support of coordinated multiple point transmission techniques in a network.

A fifth aspect provides a computer program product operable, when executed on a computer, to perform the method of the fourth aspect.

A sixth aspect provides user equipment operable to interpret downlink control signalling indicative of a component carrier and selected mode of operation of transmission points in a coordinated multipoint transmission measurement set associated with user equipment in a wireless communication network; the user equipment comprising: reception logic operable to receiving a codebook comprising a set of codepoints, each codepoint being associated with a component carrier and coordinated multipoint transmission mode of operation of transmission points in the multipoint transmission measurement set for communication with the user equipment; interpretation logic operable to interpret a codepoint received in downlink signalling with reference to the codebook; and implementation logic operable to configure the user equipment to interpret data transmissions received in accordance with a component carrier and mode of operation of transmission points in the multipoint transmission measurement set associated with the codepoint.

In one embodiment, the downlink control signalling comprises a three bit codepoint.

In one embodiment, the downlink control signalling comprises reuse of a carrier indicator field message.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

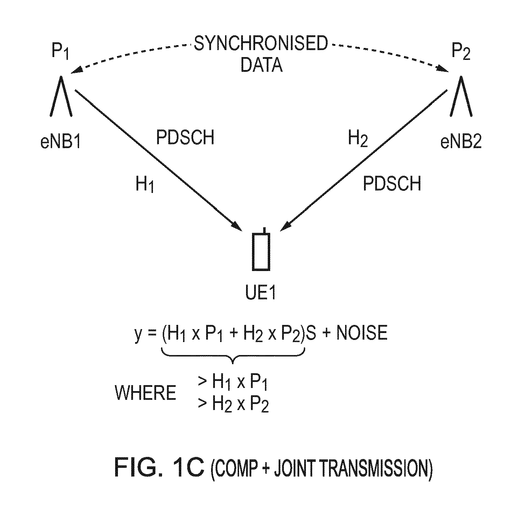

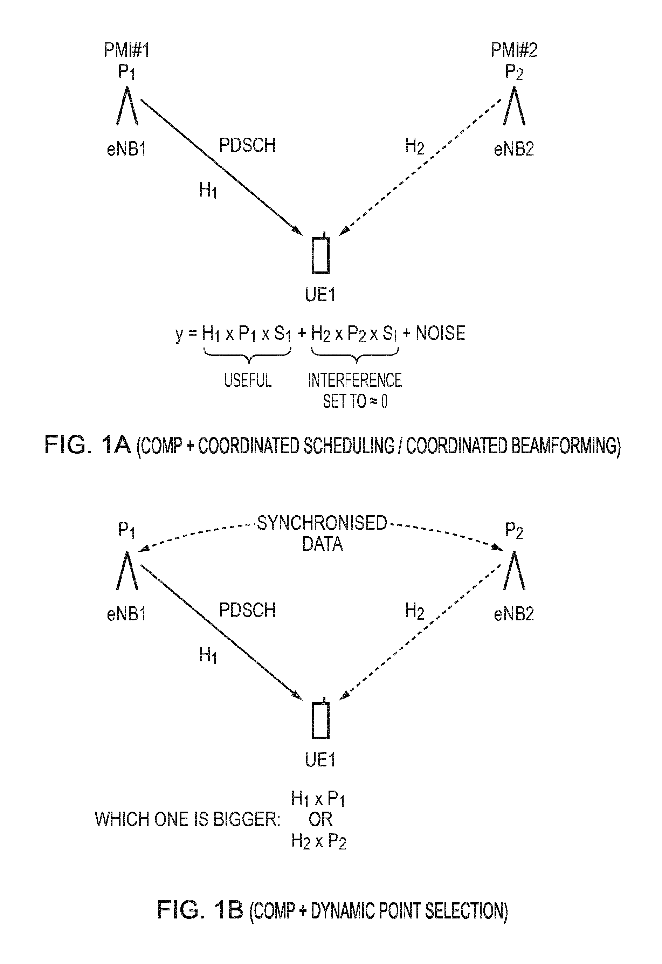

Figure 1 illustrate schematically various coordinated multipoint transmission schemes implementable in a wireless communication network.

### DESCRIPTION OF THE EMBODIMENTS

In a wireless communication system, user equipment roam through a geographical area covered by the wireless communication system. Base stations, known as eNodeBs in an LTE communications network, are provided which support respective macro cells. A number of such base stations are provided, which are distributed geographically in order to provide a wide area of coverage to user equipment. When user equipment is within a macro cell supported by an eNodeB, communications may be established between user equipment and that eNodeB over an associated radio link.

Each base station typically supports a number of sectors. Typically, a different antenna within each base station supports an associated sector. Accordingly, each base station has multiple antennas and signals sent through the different antennas are electronically weighted to provide a sectorised approach.

A wireless communication system is typically managed by high level radio resource controller. The radio resource controller controls overall operation of the wireless communication system by communicating with the eNodeBs over a backhaul communications link. The controller also communicates with the user equipment via their respective radio links with eNodeBs in order to efficiently manage overall operation of wireless communication system.

Communication between eNodeBs and user equipment within an LTE network occurs on radio resources using orthogonal frequency division multiplexing (OFDM) and MIMO techniques.

Each eNodeB transmits a cell reference signal which acts as a pilot signal and user equipment is operable to use the reference signal for various measurement purposes. In addition, an eNodeB is operable to transmit channel state information reference signals, which allow user equipment to perform channel estimation.

In order to recognise data being transmitted, user equipment must be aware of the cell reference signal and channel state reference signal(s) being transmitted by an eNodeB, so that those signals can be "subtracted" from a received signal, leaving only the relevant data portion intended for given user equipment.

It has been recognised that it is possible to increase data throughput in a wireless communications network by using coordinated multipoint (CoMP) transmission techniques.

Various coordinated multipoint techniques may be implemented within a network and main features of such coordinated transmission techniques are illustrated schematically in Figure 1a to 1c.

Figure 1a illustrates schematically a coordinated multipoint technique employing coordinated scheduling or coordinated beamforming. User equipment UE1 is operable to receive a useful transmission S1 on a data channel PDSCH from a first eNodeB, eNBi. That transmission S1 is received by UE1 is seen as a combination of a propagation characteristic H1 multiplied by a precoding index, P1, multiplied by the transmission S1. Similarly, a second eNodeB eNB2 is operable to send transmissions to user equipment operating in a region of radio coverage supported by eNB2, and thus makes transmissions SI using a precoding index P2. UE1 sees that radio signalling as interference.

Coordinated scheduling techniques are such that the operation of eNodeBs, eNB1 and eNB2, are coordinated to optimise overall operation within the network. In this case, the precoding indexes P1 and P2 used by the respective base stations are chosen to try to set the signalling that would usually be seen as interference to a signal which is approximately zero. That is to say, in the illustrated example, H2 x P2 x SI is selected to approximate zero as seen by UE1.

Figure 1b illustrates schematically a coordinated multipoint technique employing dynamic point selection. User equipment UE1 is operable to receive a useful transmission S1 on a data channel PDSCH from a first eNodeB, eNB1. That transmission S1 is received by UE1 is seen as a combination of a propagation characteristic H1 multiplied by a precoding index, P1, multiplied by the transmission S1. Similarly, a second eNodeB eNB2 is operable to send a transmission S1 to user equipment UE1 on an appropriate data channel using a precoding index P2. Data to be transmitted is synchronised between base stations eNBi and eNB2. The user equipment receives data from only one of the transmission points at a time, that transmission point being selected on the basis of which signal is better received at the user equipment at a given point. That is to say, which of H1 xP1 or H2 x P2 is larger.

Figure 1c illustrates schematically a coordinated multipoint technique employing joint transmission. User equipment UE1 is operable to receive a useful transmission S on a data channel PDSCH from a first eNodeB, eNBi. That transmission S1 is received by UE1 is seen as a combination of a propagation characteristic H1 multiplied by a precoding index, P1, multiplied by the transmission S. Similarly, a second eNodeB eNB2 is operable to send a transmission S to user equipment UE1 on an appropriate data channel using a precoding index P2. Data to be transmitted is synchronised between base stations eNBi and eNB2. The user equipment may receives data from both of the transmission points in a given timeslot, provided that receiving a transmission from both transmission points is determined to be greater than receiving from one or other of the transmission points. That is to say, provided (H1 x P1 + H2 x P2) is greater than either of of H1 xP1 or H2 x P2 taken alone.

### Overview

Before discussing the embodiments in any more detail, first an overview will be provided.

Coordinated multi-point (CoMP) transmission and reception is a tool which may be implemented within a wireless communication network operating according to LTE radio access technology and may offer improvements within a network to data rates, cell-edge throughput, and also overall system throughput. Coordinated multi-point transmission may allow such improvements by functioning to coordinate scheduling, in terms of time and frequency, and beam forming (spatial diversity) across transmission points. Each transmission point may comprise a radio cell or remote radio head. Coordinated multi-point transmission schemes may require dynamic turning on and off of transmission points, for example:

A Joint Transmission (JT) coordinated multi-point transmission scheme operates to allow simultaneous data transmission from multiple transmission points to a single user equipment or multiple user equipment in a time-frequency resource. The multiple transmission points may comprise part of, a majority of, a minority of, or an entire set of transmission points in a coordinated multi-point transmission cooperating set.

Dynamic point selection (DPS)/muting: user equipment receives a data transmission from one point (within a CoMP cooperating set) in a time-frequency resource. The transmitting/muting point may dynamically change from one subframe to another including varying over resource block pairs within a subframe. Such a coordinated multipoint transmission scheme requires that synchronised data is available simultaneously from multiple transmission points.

In both of these coordinated multipoint transmission schemes, in order to know how to decode data being sent, user equipment needs to "know" which transmission point(s) are supplying data at every subframe in order to know the positions of the PDSCH (data) by eliminating cell reference signal (CRS) information associated with a physical cell identity (PCI). The information to allow user equipment to interpret which resource elements are being used for data and which are part of a cell reference signal may be included in a message carried on a physical control channel. That message may be sent to user equipment in every downlink subframe on an appropriate physical control channel, for example, a PDCCH or ePDCCH.

LTE radio access technology may also allow for implementation of techniques which allow user equipment to receive data simultaneously on one or more carriers being transmistted by an eNB. Such techniques may be referred to as "Carrier Aggregation" and, in order to inform user equipment of the implementation of such techniques, a field known as a "Carrier Indicator Field" (CIF) exists in a Downlink Control Information message carried on an appropriate physical control channel, for example, a PDCCH or ePDCCH. The carrier indicator field allows signalling to be sent to user equipment so that the user equipment is operable to expect cross carrier scheduling. The carrier indicator field message comprises 3 bits (or 8 code points) included at the beginning of every downlink control information message format. It is assumed that up to 5 component carriers may be supported in a network operable to perform carrier aggregation techniques and therefore a 3 bit message allows for enough code points in a code book to indicate to user equipment which carriers are in use. It will be appreciated that the carrier indicator field value indicates to user equipment which carrier is in use to carry data.

If coordinated multipoint transmission techniques are employed within a network, it may be possible to indicate to user equipment which transmission point is transmitting data by reallocating the three bit carrier indicator field to act as a transmission point indicator. However it will be appreciated that such a straight reallocation is likely to mean that coordinated multipoint transmission techniques and carrier aggregation techniques could not be supported by appropriate control channel messaging simultaneously and thus those techniques may not be in operation for user equipment at the same time.

It will also be appreciated that it is possible to introduce new bits to control channel messaging to be carried on an appropriate physical control channel. That is to say, new bits may be added to an existing downlink control information message format. Such an approach may allow all available component carriers to support coordinated multipoint transmissions with, and without, cross carrier scheduling. However, introduction of new bits acts to reduce overall capacity of a physical control channel, for example, PDCCH capacity.

Aspects and embodiments described herein recognize that the carrier indicator field contains 3 bits and thus 8 code points. Since carrier aggregation is only defined for up to 5 component carriers, there are 3 unused code points in the carrier indicator field which may be re-used for other purpose. Aspects recognize that it is possible to jointly encode a carrier indicator and a transmission point (or cell) indicator within the existing 3-bit carrier indicator field, without adding any extra bits to downlink control indicator messaging. Aspects reuse the 3 "spare" code points for indicating transmission point(s) responsible for transmission of data in each subframe, thus allowing user equipment to decode transmitted data successfully.

The encoding offered by aspects and embodiments is flexible and the 3 "spare" bits can be configured differently for each user equipment operating within a network by a radio resource controller. It will be appreciated that the configured coding may also be different for each carrier which can be received by given user equipment.

Aspects and embodiments allow operational implementations within a network which take advantage of a combination of carrier aggregation and coordinated multipoint transmission techniques to be operating in parallel without incurring any additional control signalling overhead.

According to one embodiment, if a component carrier is self scheduled, that is to say, is configured to operate with control signaling, for example a PDCCH, being carried on the same component carrier(s) that carries data, coordinated multipoint transmission can be configured for each component carrier. Embodiments allow for complete reassignment or reuse of the carrier indicator field bits carried on an appropriate physical control channel, for example, the PDCCH, to indicate transmission point.

According to one embodiment, the carrier indicator field bits may be assigned as follows: In one example, the mapping between the code point and the transmission points is configured to reflect that there are 3 transmission points (TP#1, TP#2 and TP#3). Each transmission point is associated with one configured channel state information reference signal (CSI- RS) resource in a coordinated multipoint transmission measurement set.

In this example:
Code point#0 is mapped to TP#1.
Code point#1 is mapped to TP#2.
Code point#2 is mapped to Top#3.
Code point#3 is mapped to TP#1+TP#2.
Code point#4 is mapped to TP#1+TP#3_{.}
Code point#5 is mapped to TP#2+TP#3.
Code point#6 is mapped to TP#1+TP#2+TP#3.
Code point #7 may be reserved any other coordinated multipoint transmission combinations.

If a component carrier is used for cross carrier scheduling of other component carriers, the network may be operable to configure semi-statically, for example, via RRC messaging, which component carriers scheduled by the component carrier, including itself, are configured to use coordinated multipoint transmission techniques. For example, within a cross carrier scheduling set of component carriers, only one component carrier may be configured to operate using coordinated multipoint transmission techniques.

In such a cross carrier scheduling embodiment, code points are shared between coordinated multipoint transmission point combinations and cross carrier scheduling according to carrier aggregation techniques. The interpretation of each code point by user equipment can be configured semi-statically by the radio resource controller.

In such an example, in which coordinated multipoint transmission according to a DPS scheme, one possible code point assignment may be:
Code points #0 to #4 are used for cross carrier scheduling.
Code point#5 is mapped to TP#1.
Code point#6 is mapped to TP#2.
Code point#7 is mapped to TP#3.

In such an example, the network is operable to explicitly configure, on a semi-static basis, a component carrier configured to be operate using coordinated multipoint techniques within a cross carrier scheduling set.

It will be appreciated that the code point scheme allows for some redundancy. In particular, a scheme may be implemented which allows for support of up to four transmission points with five component carriers: use of one of code points 5-7 may indicate that a particular component carrier is being used, namely the component carrier semi-statically configured to operate according to coordinated multipoint transmission techniques. According to some embodiments, the code point may be used to indicate a component carrier is not needed.

A further example is illustrated schematically in the following table:
The illustrated example assumes that CCo has been preconfigured semi-statically to be the component carrier which has been selected for coordinated multipoint transmission techniques.

| **Code point** | **Meaning** |
|---|---|
| 0 | CCo, TP1 |
| 1 | CC1 |
| 2 | CC2 |
| 3 | CC3 |
| 4 | CC4 |
| 5 | CCo, TP2 |
| 6 | CCo, TP3 |
| 7 | CCo, TP4 |

In an implementation in which joint transmission coordinated multipoint operation is supported, the codebook may be configured to indicate carrier aggregation component carriers and data transmission points to user equipment to allow successful receipt of data.

According to one illustrative example:
There are 3 transmission points: TP#1, TP#2 and TP#3 and 1 component carrier requires cross scheduling by another component carrier.
Code point#0 is mapped to TP#1.
Code point#1 is mapped to TP#2.
Code point#2 is mapped to TP#3.
Code point#3 is mapped to TP#1+TP#2.
Code point#4 is mapped to TP#1+TP#3.
Code point#5 is mapped to TP#2+TP#3.
Code point#6 is mapped to TP#1+TP#2+TP#3.
Code point#7 may be used for cross-scheduling.

Such a code book is shown below:

| **Code point** | **Meaning** |
|---|---|
| 0 | CCo, TP1 |
| 1 | CCo, TP2 |
| 2 | CCo, TP3 |
| 3 | CCo, TP1+TP2 |
| 4 | CCo, TP1+TP3 |
| 5 | CCo,TP2+TP3 |
| 6 | CCo, TP1+TP2+TP3 |
| 7 | CC1 |

According to a further illustrative embodiment:

There are 2 transmission points: TP#1 and TP#2; and 2 component carriers which require cross scheduling by another component carrier. In this example:
Code point#o is mapped to TP#1.
Code point#1 is mapped to TP#2.
Code point#2 is mapped to TP#1+TP#2.
Code points #3 and #4 are used for cross-scheduling.
Code points #5 to #7 remain unassigned.

| **Code point** | **Meaning** |
|---|---|
| 0 | CCo, TP1 |
| 1 | CCo, TP2 |
| 2 | CCo, TP1+TP2 |
| 3 | CC1 |
| 4 | CC2 |
| 5 | |
| 6 | |
| 7 | |

In another embodiment, a selected subset of joint transmission coordinated multipoint transmission points (DPS can be considered as subset of JT with single point transmission) may be supported, together with up to 5 component carriers operating in carrier aggregation. One of those component carriers can be preconfigured semi-statically by RRC signalling to operate in coordinated multipoint transmission with up to 3 transmission points. An example codebook associated with such an embodiment is illustrated schematically in the table below, in which the component carrier preconfigured to operate in coordinated multipoint operation is CCo:

| **Code point** | **Meaning** |
|---|---|
| 0 | CCo, TP1 |
| 1 | CC1 |
| 2 | CC2 |
| 3 | CC3 |
| 4 | CC4 |
| 5 | CCo, TP2 |
| 6 | CCo,TP3 |
| 7 | CCo, TP1+TP2+TP3 |

The table below illustrates schematically another embodiment in which there are only 2 transmission points:

| **Code point** | **Meaning** |
|---|---|
| 0 | CCo, TP1 |
| 1 | CC1 |
| 2 | CC2 |
| 3 | CC3 |
| 4 | CC4 |
| 5 | CCo, TP₂ |
| 6 | CCo, TP1+TP2 |
| 7 | |

According to another example in which coordinated multipoint transmission is supported by two transmission points, one component carrier is configured to support DPS and JT CoMP implementation, and another component carrier is configured to use only one of DPS or JT CoMp techniques. In the table illustrating schematically a possible codebook for such an example, CCo is the component carrier configured to use DPS and JT (allowing the DCI to select dynamically between these modes), and CC1 is configured to use DPS:

| **Code point** | **Meaning** |
|---|---|
| 0 | CCo, TP1 |
| 1 | CC1, TP1 |
| 2 | CC2 |
| 3 | CC3 |
| 4 | CC4 |
| 5 | CCo, TP2 |
| 6 | CCo, TP1+TP2 |
| 7 | CC1, TP2 |

According to the following codebook an embodiment in which CC1 is configured to be able to use JT instead of DPS is demonstrated

| **Code point** | **Meaning** |
|---|---|
| 0 | CC0, TP1 |
| 1 | CC1, TP1 |
| 2 | CC2 |
| 3 | CC3 |
| 4 | CC4 |
| 5 | CCo, TP2 |
| 6 | CCo, TP1+TP2 |
| 7 | CC1, TP1 + TP2 |

It will be appreciated that other combinations of carrier aggregation and coordinated multipoint implementations may be envisaged and implemented by someone skilled in the art, and the codebooks illustrated above are not intended to be exhaustive.

The code point usage definition, also referred to as a codebook, is sent to user equipment via RRC layer signaling. At every transmit time interval, each user equipment is operable to decode physical control messaging carried on appropriate physical control channels, for example, PDCCH messages sent on its C-RNTI. Each of the physical control messages received will typically contain a downlink or uplink grant together with the 3 bit carrier indicator field message. Based on the code point definition already sent over RRC signaling to the user equipment, based on the received format of the carrier indicator field message, user equipment is operable to determine a combination of transmission points and component carriers on which data is transmitted in that transmit time interval.

Aspects allow coordinated multipoint transmission schemes to be supported simultaneously with carrier aggregation techniques within a network and there is no need to define new bits for inclusion into the downlink control information message format.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of configuring user equipment in a wireless communication network to operate to receive a transmission on one or more component carriers and a dynamically changing coordinated multipoint transmission from one or more transmission points in said network, said method comprising:
determining, for said user equipment, a set of two or more transmission points from which said user equipment may receive a transmission and allocating them to a coordinated multipoint transmission measurement set associated with said user equipment;
determining, for said user equipment, a set of component carriers and associated transmission points in said multipoint transmission measurement set from which said user equipment may receive a transmission;
allocating a set of modes of operation and component carriers associated with transmission points in said coordinated multipoint transmission measurement set for communication with said user equipment;
associating a codepoint to each mode in said allocated set of modes of operation of said set of transmission points to form a codebook; and
informing said user equipment of said codebook.

2. A method according to claim 1, wherein each codepoint comprises a 3 bit code.

3. A method according to claim 1 or claim 2, wherein a codepoint is indicative of a carrier associated with a mode of operation of said transmission points in said coordinated multipoint transmission measurement set for communication with said user equipment.

4. A method according to any preceding claim, wherein a codepoint is indicative of a cell reference signal associated with a coordinated multipoint mode of operation of said transmission points in said coordinated multipoint transmission measurement set for communication with said user equipment.

5. A method according to any preceding claim, wherein a codepoint comprises an indication of a channel state information reference signal associated with a mode of operation of said transmission points in said coordinated multipoint transmission measurement set for communication with said user equipment.

6. A method according to any preceding claim, wherein a codepoint comprises an indication of a cell reference signal or channel state information signal associated with a single transmission point involved in said mode of operation of said transmission points in said coordinated multipoint transmission measurement set for communication with said user equipment.

7. A method according to any one of claims 1 to 5, wherein a codepoint comprises an indication of a combined cell reference signal or combined channel state information signal associated with a two or more transmission points involved in said mode of operation of said transmission points in said coordinated multipoint transmission measurement set for communication with said user equipment.

8. A method according to any preceding claim, wherein said allocated set of modes comprises a sub-set of all available modes of operation of said transmission points in said coordinated multipoint transmission measurement set for communication with said user equipment.

9. A computer program product operable, when executed on a computer, to perform the method of any one of claims 1 to 8.

10. A network control node operable to configure user equipment in a wireless communication network to operate to receive a transmission on one or more component carriers or a dynamically changing coordinated multipoint transmission from one or more transmission points in the network, the method comprising:
determining, for the user equipment, a set of two or more transmission points from which the user equipment may receive a transmission and allocating them to a coordinated multipoint transmission measurement set associated with the user equipment;
determining, for the user equipment, a set of component carriers and associated transmission points in the multipoint transmission measurement set from which the user equipment may receive a transmission;
allocating a set of modes of operation and component carriers associated with transmission points in the coordinated multipoint transmission measurement set for communication with the user equipment;
associating a codepoint to each mode in the allocated set of modes of operation of the set of transmission points to form a codebook; and
informing the user equipment of the codebook.

11. A method of interpreting downlink control signalling indicative of a component carrier and selected mode of operation of transmission points in a coordinated multipoint transmission measurement set associated with user equipment in a wireless communication network; said method comprising:
receiving a codebook comprising a set of codepoints, each codepoint being associated with a component carrier and coordinated multipoint transmission mode of operation of transmission points in said multipoint transmission measurement set for communication with said user equipment;
interpreting a codepoint received in downlink signalling with reference to said codebook; and
configuring said user equipment to interpret data transmissions received in accordance with a component carrier and mode of operation of transmission points in said multipoint transmission measurement set associated with said codepoint.

12. A method according to claim 11, wherein said downlink control signalling comprises a three bit codepoint.

13. A method according to claim 11 or claim 12, wherein said downlink control signalling comprises reuse of a carrier indicator field message.

14. A computer program product operable, when executed on a computer, to perform the method of any one of claims 11 to 13.

15. User equipment operable to interpret downlink control signalling indicative of a component carrier and selected mode of operation of transmission points in a coordinated multipoint transmission measurement set associated with user equipment in a wireless communication network; said user equipment comprising:
reception logic operable to receiving a codebook comprising a set of codepoints, each codepoint being associated with a component carrier and coordinated multipoint transmission mode of operation of transmission points in said multipoint transmission measurement set for communication with said user equipment;
interpretation logic operable to interpret a codepoint received in downlink signalling with reference to said codebook; and
implementation logic operable to configure said user equipment to interpret data transmissions received in accordance with a component carrier and mode of operation of transmission points in said multipoint transmission measurement set associated with said codepoint.
